# EUROPEAN PATENT APPLICATION

(11) **EP 4 761 249 A1**
(43) Date of publication of application: **17.06.2026**
(21) Application number: 23952334.3
(22) Date of filing: 11.09.2023
(51) Int. Cl.: H04N 21/43, H04N 21/4363, H04N 21/436, H04N 21/426

(54) **IMAGE DISPLAY DEVICE AND CONTROL METHOD THEREFOR**

(71) Applicant: LG ELECTRONICS INC., Yeongdeungpo-gu Seoul 07336 (KR)
(72) Inventor: KIM, Sanghun, Seoul 06772 (KR); JEONG, Hyojeong, Seoul 06772 (KR); LEE, Hansu, Seoul 06772 (KR)
(74) Representative: Schott, Jakob Valentin
(86) International application number: PCT/KR2023/013598
(87) International publication number: WO 2025/058094

(57) **Abstract**

The present invention relates to an image output device and a control method therefor. The image output device comprises: a display; a network interface unit that exchanges data with a server; an external device interface unit that is wirelessly connected to an external speaker; an audio output unit; and a signal processing device that controls the sound output of the external speaker and the audio output unit. The signal processing device, when configured so that sound is output via the external speaker: receives a user request for the sound to be output via both the external speaker and the audio output unit; transmits information about the external speaker to the server on the basis of the user request; receives audio delay information related to the external speaker from the server; and, on the basis of the received audio delay information, performs synchronization of the sound output from the external speaker and the audio output unit.

## Description

### Technical Field

The present disclosure relates to a video display device and a method of controlling the video display device and, more specifically, to synchronization of respective sound outputs of an external speaker and a speaker of the video display device.

### Background Art

A video display device is a device configured to provide an image viewable by a user. The user may view a broadcast through the video display device. The video display device provides a broadcast selected by the user among broadcast signals transmitted from a broadcasting station, and such a broadcast image is displayed on a display. Currently, there is a global trend toward transitioning from analog broadcasting to digital broadcasting.

The digital broadcasting refers to broadcasting that transmits digital video and audio signals. The digital broadcasting is more resistant to external noise than the analog broadcasting, has less data loss, is advantageous for error correction, and provides high resolution and clear images. In addition, the digital broadcasting, unlike the analog broadcasting, may provide bidirectional services.

In recent years, connecting an external speaker to the video display device has enabled viewing of images with improved sound quality. In the case of the external speaker, the image transmission time and the sound output time may not be matched with each other due to the time required for a video output device to transfer a signal to the external speaker. In this case, a synchronization operation for matching the image transmission time and the sound output time with each other is performed.

### Disclosure of Invention

### Technical Problem

One object of the present disclosure is to provide a video output device capable of outputting sound together through both an external speaker and an audio output unit, and a method of controlling the video output device.

Another object of the present disclosure is to provide a video output device capable of synchronizing sound output timing in an optimized manner when outputting sound together through both an external speaker and an audio output unit, and a method of controlling the video output device.

### Solution to Problem

To accomplish the above-mentioned objects, according to one aspect of the present disclosure, there is provided a video output device including: a display; a network interface unit that exchanges data with a server; an external device interface unit wirelessly connected to an external speaker; an audio output unit; and a signal processing device that controls respective sound outputs of the external speaker and the audio output unit, wherein, in a state where sound is set to be output through the external speaker, the signal processing device receives a user request to output sound together through both the external speaker and the audio output unit, transmits information on the external speaker to the server and receives audio delay information associated with the external speaker from the server in response to the user request, and synchronizes a sound output of the respective sound outputs of the external speaker and the audio output unit based on the received audio delay information.

In an embodiment, in the video output device, the external speaker may be a Bluetooth speaker connected via Bluetooth through a wireless communication unit included in the external device interface unit.

In an embodiment, in the video output device, the state where the sound is set to be output through the external speaker may be a state where the external speaker is connected via Bluetooth so as to output sound associated with an image output from the video output device through the external speaker instead of the audio output unit.

In an embodiment, in the video output device, in response to the user request, the signal processing device may transmit the information on the external speaker to the server through the network interface unit, and may concurrently request the audio delay information associated with the external speaker from the server.

In an embodiment, in the video output device, the information on the external speaker may include at least one of the following: a device name of the external speaker and MAC address information of the external speaker.

In an embodiment, in the video output device, upon receiving the audio delay information associated with the external speaker from the server, the signal processing device may adjust a sound output time of the audio output unit based on a delay time included in the audio delay information.

In an embodiment, in the video output device, when synchronizing the sound output of the audio output unit based on the audio delay information, the signal processing device may synchronize the sound output of the audio output unit while maintaining a connection to the external speaker without disconnecting the external speaker.

In an embodiment, in the video output device, when synchronizing the respective sound outputs of the external speaker and the audio output unit based on the audio delay information, the signal processing device may adjust an image output time of an image output from the display and a sound output time of sound output from the audio output unit based on a delay time included in the audio delay information.

In an embodiment, in the video output device, when the signal processing device does not receive the audio delay information associated with the external speaker from the server, the signal processing device may disconnect from the external speaker and may measure a delay time regarding an audio output time of the external speaker.

In an embodiment, in the video output device, based on the measured delay time, the signal processing device may set a sound output time of the audio output unit so as to output sound together through both the external speaker and the audio output unit and may reconnect to the external speaker, thereby outputting sound together through both the external speaker and the audio output unit.

In an embodiment, in the video output device, when sound is output together through both the external speaker and the audio output unit without any additional change in settings for a predetermined time, the signal processing device may transmit the information on the external speaker and information on the measured delay time to the server.

### Advantageous Effects of Invention

According to the present disclosure, sound can be output together through both an external speaker and an audio output unit of a video output device.

According to the present disclosure, when sound is output together through both the external speaker and the audio output unit of the video output device, respective sound outputs of the external speaker and the audio output unit of the video output device can be synchronized without performing a separate sound synchronization process.

According to the present disclosure, when sound is output together through both the external speaker and the audio output unit of the video output device, a process of disconnecting the previously connected external speaker for synchronization and performing synchronization can be omitted, thereby shortening the switching time of a sound output mode and simplifying the switching process.

### Brief Description of Drawings

FIG. 1 is a conceptual diagram that is referenced to describe an environment in which a video output device according to an embodiment of the present disclosure is utilized.
FIG. 2 is a block diagram that is referenced to describe the video output device according to the embodiment of the present disclosure.
FIG. 3 is a block diagram that is referenced to describe a signal processing device according to an embodiment of the present disclosure.
FIG. 4 is a flowchart that is referenced to describe a control method of controlling the video output device according to the embodiment of the present disclosure.
FIGS. 5 and 6 are flowcharts that are referenced to describe in more detail the method of controlling the video output device, the method being described with reference to FIG. 3.

### Mode for the invention

Embodiments disclosed in the present specification will be described in detail below with reference to the accompanying drawings. The same reference numerals are used for the same or similar constituent elements, regardless of the drawings in which they appear, and redundant descriptions thereof are not repeated. The terms "module" and "unit" are hereinafter used interchangeably to name constituent elements solely for the convenience of description in the present specification. These terms are not intended to have different meanings or to indicate different functions. In addition, in describing the embodiments disclosed in the present specification, detailed descriptions of well-known related technologies may be omitted when such descriptions are deemed to obscure the nature and gist of the present disclosure. In addition, the accompanying drawings are merely provided to facilitate understanding of the embodiments disclosed in the present specification and shall not be construed as limiting the technical idea disclosed in the present specification. Furthermore, any modifications, equivalents, or substitutions of constituent elements, to the extent falling within the technical scope of the present disclosure, are intended to be encompassed within the scope of the present disclosure.

The ordinal numbers first, second, and so forth may be used to describe various elements, but they do not limit these elements. These terms are used merely to distinguish among constituent elements having similar functions.

It should be understood that a constituent element, when referred to as "being connected to" or "having access to" a different constituent element, may be directly connected to or have direct access to the different constituent element, or may be indirectly connected to or have access to the different constituent element through one or more intermediate constituent elements. Likewise, it should be understood that, when a constituent element is described as being "connected to" or "having access to" another constituent element, such connection or access may be direct without the need for one or more intermediary constituent elements.

A noun in singular form, unless clearly indicated otherwise by the context, shall be understood to include the plural form.

The terms "include," "have," and equivalent expressions, as used in the present application, shall be understood to indicate the presence of a feature, number, step, operation, constituent element, component, or combination thereof, without precluding the possibility of the presence or addition of one or more other features, numbers, steps, operations, constituent elements, components, or combinations thereof.

Picture output presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head-mounted displays (HMDs)), and the like.

However, it would be apparent to a person of ordinary skill in the art to which the present specification pertains that constituent elements according to an embodiment described in the present disclosure may find application not only in video output devices, but also in stationary terminals, such as digital TV sets, desktop computers, and digital signage.

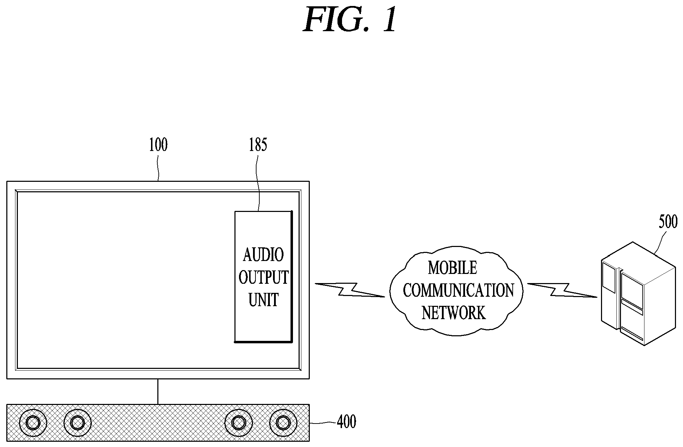

FIG. 1 is a conceptual diagram that is referenced to describe an environment in which a video output device according to an embodiment of the present disclosure is utilized.

A video output device 100 according to an embodiment of the present disclosure may include an audio output unit 185 that outputs sound, an external speaker (or Bluetooth speaker) 400 that is connected wirelessly via Bluetooth technology and configured to output sound, and a server 500 that communicates with the video output device 100 via a mobile communication network.

The audio output unit 185 may be a speaker provided within the display device 100.

The external speaker 400 is provided independently of the video output device 100 and may be connected to the video output device via wireless communication technology (e.g., Bluetooth technology, Blu-ray technology, Wi-Fi technology, or similar technology) or via a wired connection. Thus, the external speaker 400 may be configured to output sound corresponding to content output from the video output device.

The external speaker 400 may require time to receive a sound output signal, thereby causing in a delay in output for a predetermined period of time.

To address the delay, a signal output device 170 of the video output device 100 may perform an operation of matching (or synchronizing) the output timing at which an image is displayed on a display and the output timing at which sound is output from the external speaker. This operation may be referred to as synchronization. Synchronization operations are well known and thus a detailed description thereof is omitted.

The video output device 100 according to the present disclosure may be connected to output sound through the external speaker 400. In this state, the video output device 100 may enter a mode in which the external speaker 400 and an audio output unit (speaker) 185 provided within the video output device 100 simultaneously output sound.

In this case, in related art, to synchronize respective sound outputs of the external speaker 400 and the audio output unit 185 with each other, inconveniently, the external speaker 400 that is in connection is disconnected, the operation of synchronizing respective sound outputs of the external speaker 400 and the audio output unit 185 is performed separately, and the external speaker is reconnected to the audio output unit.

According to the present disclosure, data communication with the server can readily solve this problem.

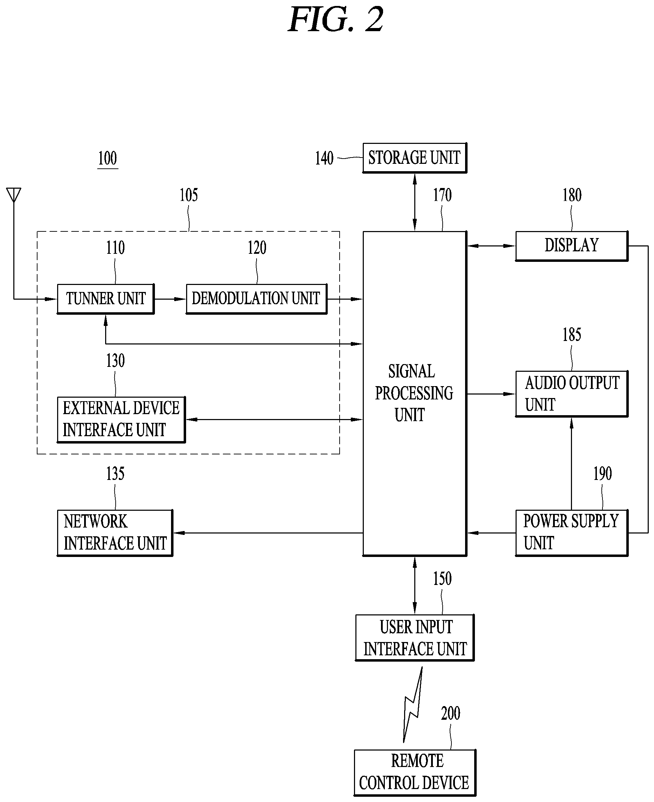

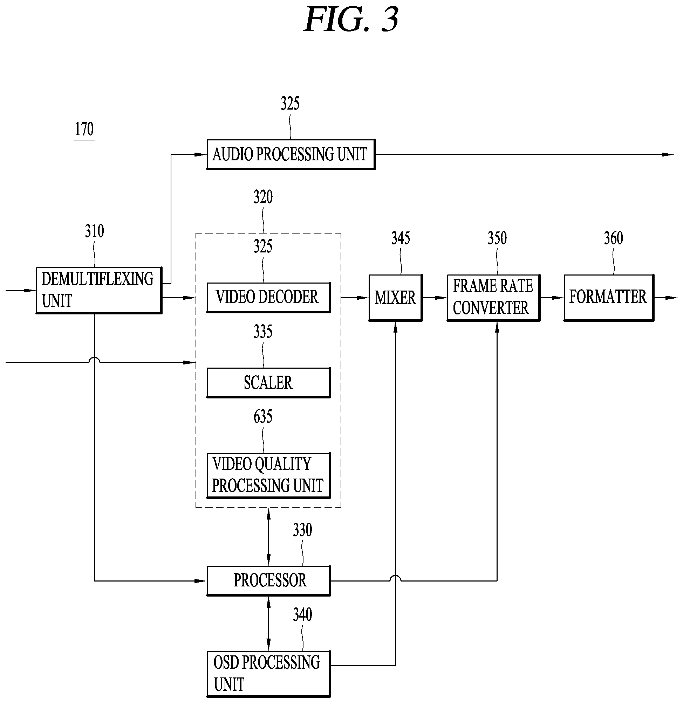

FIG. 2 is a block diagram that is referenced to describe the video output device according to the embodiment of the present disclosure. FIG. 3 is a block diagram that is referenced to describe a signal processing device according to an embodiment of the present disclosure.

With reference to FIG. 2, a video display device 100 according to the embodiment of the present disclosure may include a video reception unit 105, an external device interface unit 130, a network interface unit 135, a storage unit 140, a user input interface unit 150, a sensor unit (not illustrated), a signal processing device 170, a display 180, and an audio output unit 185.

The video reception unit 105 may receive an input video signal. For example, the video reception unit 105 may receive an external input video signal, such as a broadcast video signal, an HDMI video signal, or a streaming video signal.

The video reception unit 105 may include a tuner unit 110, a demodulation unit 120, and the external device interface unit 130.

Unlike what is illustrated in the drawings, the video reception unit 105 may also include the tuner unit 110, the demodulation unit 120, the external device interface unit 130, and the network interface unit 130.

The tuner unit 110 selects an RF broadcast signal, corresponding to a channel selected by a user, or RF broadcast signals, corresponding to all pre-stored channels, from among RF signals received through an antenna (not illustrated). In addition, the tuner unit 110 converts the selected RF broadcast signal into an intermediate frequency signal, a baseband video or audio signal.

In addition, the tuner unit 110 may include a plurality of tuners to receive broadcast signal over a plurality of channels. Alternatively, the tuner unit 110 may be a single tuner that simultaneously receives broadcast signals over a plurality of channels.

The demodulation unit 120 receives a digital IF (DIF) signal resulting from the conversion by the tuner unit 110 and performs demodulation.

The demodulation unit 120 may output a stream signal TS after performing demodulation and channel decoding. At this point, the stream signal may be a signal resulting from multiplexing a video signal, an audio signal, or a data signal.

The stream signal output from the demodulation unit 120 may be input to the signal processing device 170. The signal processing device 170 performs demultiplexing, video/audio signal processing, and similar processing. Then, signal processing device 170 outputs the resulting image to the display 180 and outputs the resulting sound to the audio output unit 185.

The external device interface unit 130 can transmit data to or receive data from a connected external device (not illustrated), for example, a set-top box 50.

To this end, the external device interface unit 130 may include an A/V input/output unit (not illustrated), a wireless communication unit, and the like.

The external device interface unit 130 may also be connected to an external device, such as a digital versatile disk (DVD), a Blu-ray player, a game device, a camera, a camcorder, a computer (e.g., a laptop computer), a set-top box, or the like via a wired/wireless connection.

The A/V input/output unit within the external device interface unit 130 may receive video and audio signals from external devices. The wireless communication unit (not illustrated) within the external device interface unit 130 may perform short-range communication with other electronic devices.

Through the wireless communication unit, the external device interface unit 130 may exchange data with an adjacent mobile terminal. In particular, in a mirroring mode, the external device interface unit 130 may receive device information, information on an application being executed, an application image, and the like from the mobile terminal.

The network interface unit 135 provides an interface for connecting the video display device 100 to a wired/wireless network that includes the Internet. For example, the network interface unit 135 may receive content or data provided by a content provider or a network operator via a network that includes the Internet.

The network interface unit 135 may include the wireless communication unit (not illustrated).

The storage unit 140 may also store a program for signal processing and control within the signal processing device 170, and a video, audio, or data signal that results from signal processing.

In addition, the storage unit 140 may also perform a function of temporarily storing a video, audio, or data signal that is input into the external device interface unit 130. In addition, storage unit 140 may store information regarding a predetermined broadcast channel by using a channel memory function, such as a channel map.

FIG. 2 illustrates an embodiment in which the storage unit 140 is provided separately from the signal processing device 170. However, the present disclosure is not limited to this embodiment. The storage unit 140 may be included within the signal processing device 170.

The user input interface unit 150 transfers a signal, input by the user, to the signal processing device 170 or transfers a signal from the signal processing device 170 to the user.

For example, the user input interface unit 150 may transmit/receive a user input signal, such as power-on/off, channel selection, or screen setting, to/from a remote control device 200. Alternatively, the user input interface unit 150 may transfer a user input signal, input from a local key (not illustrated), such as a power key, a channel key, a volume key, or a setting key, to the signal processing device 170. Alternatively, the user input interface unit 150 may transfer a user input signal, input from the sensor unit (not illustrated) that senses the user's gesture, to the signal processing device 170. Alternatively, the user input interface unit 150 may transmit a signal from the signal processing device 170 to the sensor unit (not illustrated).

The signal processing device 170 may demultiplex a stream, input through the tuner unit 110, the demodulator unit 120, the network interface unit 135, or the external device interface unit 130, or may process signals resulting from the demultiplexing, thereby generating and outputting a signal for video or audio output.

For example, the signal processing device 170 may receive a broadcast signal or an HDMI signal from the video reception unit 105 and may perform signal processing on the basis of the received broadcast signal or HDMI signal, thereby outputting a video signal resulting from the signal processing.

A video signal resulting from video processing by the signal processing device 170 is input into the display 180, thereby being displayed as an image corresponding to the video signal. In addition, the video signal resulting from video processing by the signal processing device 170 may be input into an external output device through the external device interface unit 130.

An audio signal resulting from processing by the signal processing device 170 may be output as sound through the audio output unit 185. In addition, an audio signal resulting from processing by the signal processing device 170 may be input into an external output device through the external device interface unit 130.

Although not illustrated in FIG. 2, the signal processing device 170 may include a demultiplexing unit, a video processing unit, and the like. That is, the signal processing device 170 may perform various signal processing operations, and accordingly, may be configured in the form of a system on chip (SOC). With reference to FIG. 3, these operations will be described below.

In addition, the signal processing device 170 may control overall operations within the video display device 100. For example, the signal processing device 170 may control the tuner unit 110, thereby enabling selection (tuning) of an RF broadcast signal corresponding to a channel selected by the user or to a pre-stored channel.

In addition, the signal processing device 170 may control the video display device 100 by utilizing a user command input through the user input interface unit 150 or by executing an internal program.

The signal processing device 170 may control the display 180 to display a video. At this point, the image displayed on the display 180 may be a still image or a moving image. The image may be a 2D image or a 3D image.

The signal processing device 170 may enable a predetermined object to be displayed within an image displayed on the display 180. For example, the object may be at least one of the following: a connected web screen (such as a newspaper or magazine), an Electronic Program Guide (EPG), a menu, a widget, an icon, a still image, a moving image, or text.

The signal processing device 170 may determine the position of the user on the basis of an image captured by an image capture unit (not illustrated). For example, the signal processing device 170 may determine a distance (a Z-axis coordinate) between the user and the display device 100. In addition, the signal processing device 170 may determine X-axis and Y-axis coordinates within the display 180, the X-axis and Y-axis coordinates corresponding to the position of the user.

The display 180 converts a video signal, a data signal, an OSD signal, or a control signal, each of which results from processing by the signal processing device 170, thereby generating a driving signal. Alternatively, the display 180 converts a video signal, a data signal, a control signal, or the like, each of which is received by the external device interface unit 130, thereby generating a driving signal.

The display 180 may also be configured as a touch screen, thereby being used as an input device, in addition to an output device.

The audio output unit 185 receives as an input a signal resulting from audio processing by the signal processing device 170 and outputs the signal as sound.

The image capture unit captures an image of the user. The image capture unit (not illustrated) may be configured as one camera, but is not limited to this configuration. The image capture unit may be configured to include a plurality of cameras. Information on the image captured by the image capture unit (not illustrated) may be input into the signal processing device 170.

The signal processing device 170 may detect a gesture of the user on the basis of each of the images captured by the image capture unit (not illustrated) or on the basis of a combination of the images.

The signal processing device 170 may be configured in the form of a system on chip (SOC).

The power supply unit 190 supplies the power throughout the entire video display device 100. In particular, the power supply unit 190 may supply power to the signal processing device 170, configured in the form of a system on chip (SOC), the display 180 for video display, the audio output unit 185 for audio output, and the like.

Specifically, the power supply unit 190 may include a converter for converting alternating current into direct current and a DC/DC converter for converting the level of the direct current.

The remote control device 200 transmits a user input to the user input interface unit 150. To this end, the remote control device 200 may support Bluetooth communication, Radio Frequency (RF) communication, infrared (IR) communication, Ultra-Wideband (UWB) communication, or ZigBee communication. In addition, the remote control device 200 may receive a video signal, an audio signal, a data signal, or the like, each of which is output from the user input interface unit 150, and then, may display the received signal on the remote control device 200 or output the received signal as audio output.

The video display device 100 may be a stationary or mobile digital broadcast receiver capable of receiving a digital broadcast.

FIG. 2 is a block diagram illustrating the video display device 100 according to the embodiment of the present disclosure. According to the specifications of the actually configured video display device 100, one or more constituent elements in the block diagram may be integrated or omitted, or one or more additional constituent elements may be added. That is, as necessary, two or more constituent elements may be integrated into a single constituent element, or a single constituent element may be subdivided into and configured as two or more constituent elements. In addition, the functions performed in the respective blocks are referenced to describe an embodiment of the present disclosure. Specific operations or devices for such functions do not limit the scope of the claims of the present disclosure.

FIG. 3 is an example of an internal block diagram illustrating the signal processing device in FIG. 2.

With reference to the drawings, the signal processing device 170 according to the embodiment of the present disclosure may include a demultiplexing unit 310, a video processing unit 320, a processor 330, and an audio processing unit 370. In addition, the signal processing device 170 may further include a data processing unit (not illustrated).

The demultiplexing unit 310 demultiplexes an input stream. For example, in a case where an MPEG-2 TS is input, the MPEG-2 TS is demultiplexed, thereby being separated into video, audio, and data signals. At this point, a stream signal input into the demultiplexing unit 310 may be a stream signal output from the tuner unit 110, the demodulation unit 120, or the external device interface unit 130.

The video processing unit 320 may perform signal processing on an input image. For example, the video processing unit 320 may perform video processing on a video signal resulting from demultiplexing by the demultiplexing unit 310.

To this end, the video processing unit 320 may include a video decoder 325, a scaler 335, a video quality processing unit 635, a video encoder (not illustrated), an OSD processing unit 340, a frame rate converter 350, and a formatter 360.

The video decoder 325 decodes the demultiplexed video signal, and the scaler 335 performs scaling on the resolution of the decoded video signal so as to output the image on the display 180.

The video decoder 325 may include a plurality of decoders that respectively support various standards. For example, the video decoder 325 may include a decoder for MPEG-2 and H.264, a 3D video decoder for a color image and a depth image, a decoder for a multi-view image, and the like.

The scaler 335 may scale the input video signal on which video decoding has been performed by the video decoder 325 or the like.

The scaler 335 may upscale the input video signal in a case where the size or resolution of the input video signal is small and may downscale the input video signal in a case where the size or resolution of the input video signal is large.

The video quality processing unit 635 may perform image quality processing on the input video signal on which video decoding has been performed by the image decoder 325 or the like.

For example, the video quality processing unit 635 may perform noise removal processing on the input video signal, expand a gradation resolution of the input video signal, perform video resolution enhancement, perform signal processing based on high dynamic range (HDR), vary a frame rare, or perform image quality processing in accordance with panel characteristics, particularly, for an organic light-emitting panel, or the like.

The OSD processing unit 340 generates an OSD signal in response to user input or independently. For example, based on the user input signal, the OSD processing unit 340 may generate a signal for displaying various types of information as a graphic or text on the screen of the display 180. The generated OSD signals may include various data, such as a user interface screen of the video display device 100, various menu screens, widgets, and icons. In addition, the generated OSD signal may include a 2D object or a 3D object.

In addition, the OSD processing unit 340 may generate a pointer displayable on the display on the basis of a pointing signal input from the remote control device 200. In particular, the pointer may be generated by a pointing signal processing device, and the OSD processing unit 240 may include the pointing signal processing device (not illustrated). Of course, the pointing signal processing device (not illustrated) may be provided separately instead of being included within the OSD processing unit 240.

The frame rate converter (FRC) 350 may convert the frame rate of the input video signal. The frame rate converter 350 may output the input video signal directly without performing separate frame rate conversion.

The formatter 360 may convert the format of the input video signal into a format for display and output the resulting video signal.

Specifically, the formatter 360 may convert the format of the video signal so as to correspond to a display panel.

The formatter 360 may also convert the format of the video signal. For example, the format of a 3D video signal may be converted into any one of various 3D formats that include a side-by-side format, a top-down format, a frame sequential format, an interlaced format, a checkerboard format, and the like.

The processor 330 may control overall operations within the video display device 100 or the signal processing device 170.

For example, the processor 330 may control the tuner 110, thereby enabling selection (tuning) of the RF broadcast signal corresponding to the channel selected by the user or to the pre-stored channel.

In addition, the processor 330 may control the video display device 100 by utilizing a user command input through the user input interface unit 150 or by executing an internal program.

In addition, the processor 330 can perform the data transmission control with the network interface unit 135 or the external device interface unit 130.

In addition, the processor 330 can control the operations of the demultiplexing unit 310, the video processing unit 320 within the signal processing device 170, and the like.

The audio processor 370 within the signal processing device 170 may perform audio processing on a demultiplexed audio signal. To this end, the audio processing unit 370 may be configured to include various decoders.

In addition, the audio processing unit 370 within the signal processing device 170 may process bass, treble, volume, and the like.

The data processing unit (not illustrated) within the signal processing device 170 may perform data processing on a demultiplexed data signal. For example, in a case where the demultiplexed data signal is an encoded data signal, the demultiplexed data signal may be decoded. The encoded data signal may be electronic program guide information that includes broadcast information, such as a start time and an end time of a broadcast program aired on each channel.

FIG. 3 is a block diagram illustrating the signal processing device 170 according to an embodiment of the present disclosure. According to the specifications of the actually configured signal processing device 170, one or more constituent elements in the block diagram may be integrated or omitted, or one or more additional constituent elements may be added.

Specifically, the frame rate converter 350 and the formatter 360 may also be provided separately from the image processor 320.

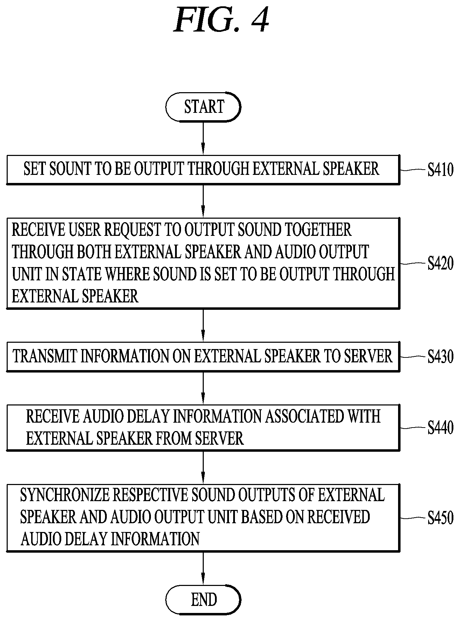

FIG. 4 is a flowchart that is referenced to describe a control method of controlling the video output device according to the embodiment of the present disclosure.

In the method of controlling the video output device according to the embodiment of the present disclosure, a step of setting sound to be output through the external speaker is performed (S410).

In response to a user request, the signal processing device 170 may be connected wirelessly to the external speaker through the external device interface unit.

In this case, the signal processing device 170 may set sound associated with an image output from the display 180 of the video output device so as to be output through the external speaker 400.

In this case, the signal processing device 170 may perform an operation of synchronizing with the external speaker 400, and may delay the image output timing of the display 170 by a delay time of a sound output from the external speaker 400, thereby matching (that is, synchronizing) the image and the sound.

The external speaker may be a Bluetooth speaker that is connected via Bluetooth through the wireless communication unit included in the external device interface unit.

A state where sound is set to be output through the external speaker may be a state where the external speaker is connected via Bluetooth so as to output sound associated with an image output from the video output device through the external speaker instead of the audio output unit.

In the method of controlling the video output device according to the embodiment of the present disclosure, a step of receiving a user request to output sound together through both the external speaker and the audio output unit is performed in the state where sound is set to be output through the external speaker (S420).

Specifically, the signal processing device 170 may receive a user request to output sound through both the external speaker and the audio output unit in the state where sound is set to be output through the external speaker. As an example, the user request may be received through the remote control device 200 (a remote controller, a mobile terminal, or the like).

['121] Subsequently, in the method of controlling the video output device according to the embodiment of the present disclosure, in response to the user request, information on the external speaker may be transmitted to the server 500 (S430), and audio delay information associated with the external speaker may be received from the server (S440).

In response to the user request, the signal processing device 170 may transmit the information on the external speaker to the server through the network interface unit, and concurrently request the audio delay information associated with the external speaker from the server.

The information on the external speaker may include at least one of the following: the device name of the external speaker and MAC address information of the external speaker.

Subsequently, based on the received audio delay information, the method of controlling the video output device according to the embodiment of the present disclosure may synchronize respective sound outputs of the external speaker and the audio output unit with each other (S450).

Upon receiving the audio delay information associated with the external speaker from the server, the signal processing device 170 may adjust the sound output time of the audio output unit based on the delay time included in the audio delay information.

At this point, when performing synchronization of a sound output of the audio output unit based on the audio delay information, the signal processing device 170 may synchronize the sound output of the audio output unit while maintaining a connection to the external speaker without disconnecting the external speaker.

In addition, when synchronizing the respective sound outputs of the external speaker and the audio output unit, the signal processing device 170 can adjust an image output time of an image output from the display and a sound output time of sound output from the audio output unit based on the delay time included in the audio delay information.

That is, to match a delay time of the external speaker, the signal processing device 170 may adjust the synchronization of the image output time of the image output from the display 180 and the sound output time of the sound output from the audio output unit 185 in accordance with the output delay time of the external speaker. That is, the reference for the synchronization may be the delay time of the external speaker.

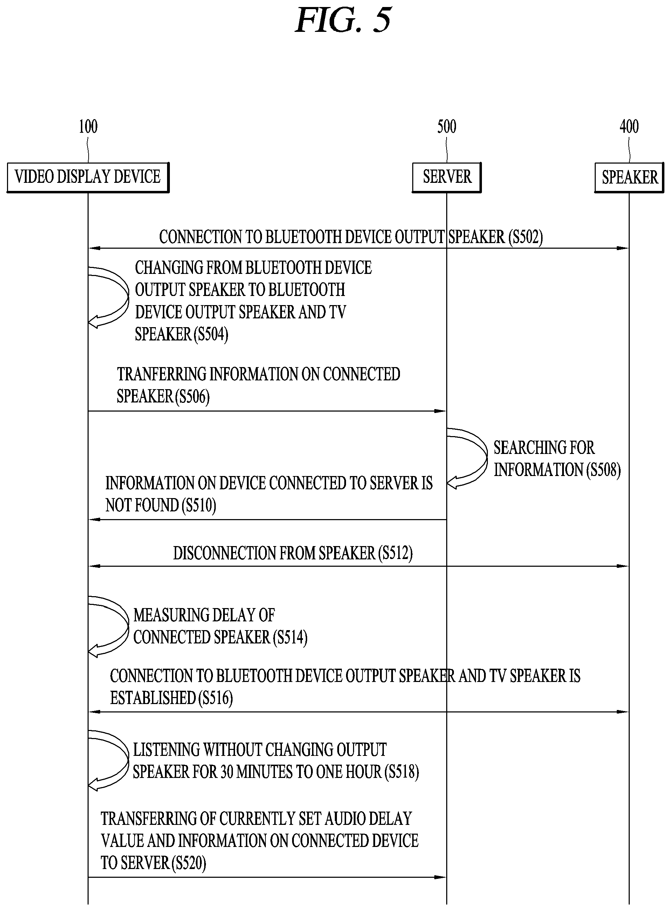

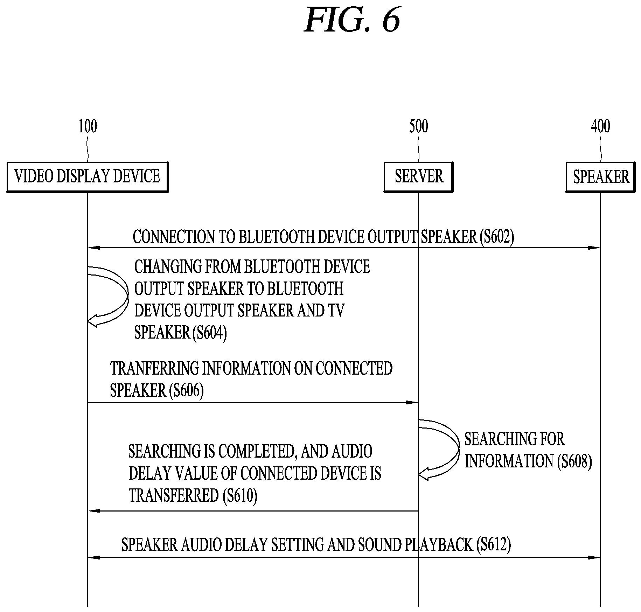

FIGS. 5 and 6 are flowcharts that are referenced to describe in more detail the method of controlling the video output device, the method being described with reference to FIG.3.

FIG. 5 is a flowchart that is referenced in a case where the information on the external speaker is not stored in the server.

The video display device 100 and the external speaker 400 (hereinafter referred to as a Bluetooth device output speaker) may be connected to each other through the wireless communication unit so as to output sound (S502).

At this point, in response to the user request, a sound output mode may be switched from a first mode in which sound is output to the Bluetooth device output speaker to a second mode in which both the Bluetooth device output speaker and the audio output unit (hereinafter referred to as a TV speaker) of the video output device output sound (S504).

In this case, the video display device 100 may transfer information (i.e., Bluetooth device output information) on the connected speaker to the server 500 (S506).

The server 500 searches for information based on the received speaker information (S508). In a case where no device is connected to the server, the server 500 may notify the video display device 100 that the information has not been found (S510).

When the signal processing device does not receive the audio delay information associated with the external speaker (Bluetooth device output speaker) from the server, the signal processing device 170 disconnects from the external speaker (Bluetooth device output speaker) (S512) and may measure a delay time regarding an audio output time of the external speaker (Bluetooth device output speaker) (S514).

Subsequently, based on the measured delay time, the signal processing device 170 may synchronize the Bluetooth device output speaker and the TV speaker with each other and enter the second mode (S516).

That is, based on the measured delay time, the signal processing device may set a sound output time of the audio output unit so as to output sound together through both the external speaker (Bluetooth device output speaker) and the audio output unit (TV speaker), and may reconnect to the external speaker, thereby outputting sound through both the external speaker and the audio output unit (S516).

Subsequently, when sound is output together through both the external speaker (Bluetooth device output speaker) and the audio output unit (TV speaker) without any additional change in settings for a predetermined time (S518), the signal processing device 170 may transmit the information on the external speaker and information on the measured delay time (an audio delay value) to the server 500 (S520).

FIG. 6 is a flowchart that is referenced in a case where the information on the external speaker is stored in the server.

The descriptions of Steps S502, S504, S506, and S508 may apply, mutatis mutandis, to Steps S602, S604, S606, and S608 in the same or similar manner.

Subsequently, the server 500 may transfer the delay time information associated with the external speaker (Bluetooth device output speaker) connected to the video display device to the video display device 100 (S610).

When synchronizing the sound output from the audio output unit (TV speaker) based on the delay information, the video display device 100 may synchronize the sound output of the audio output unit while maintaining the connection to the external speaker without disconnecting the external speaker.

As described above, the synchronization may be understood as a syn matching operation and may refer to the operation of matching the output time of the image output from the display of the video display device and the output time of the sound output from the audio output unit with each other based on the sound output time (or delay time) of the external speaker.

According to the present disclosure, sound can be output together through both the external speaker and the audio output unit of the video output device.

According to the present disclosure, when sound is output together through both the external speaker and the audio output unit of the video output device, the respective sound outputs of the external speaker and the audio output unit of the video output device can be synchronized without performing a separate sound synchronization process.

According to the present disclosure, when sound is output together through both the external speaker and the audio output unit of the video output device, the process of disconnecting the previously connected external speaker for synchronization and performing synchronization can be omitted, thereby shortening the switching time of the sound output mode and simplifying the switching process.

In the foregoing, preferred embodiments of the present disclosure have been illustrated and described, but the present disclosure is not limited to the specific embodiments described above. Various modified embodiments can be implemented by a person having ordinary skill in the technical field to which the present disclosure pertains without departing from the gist of the present disclosure as claimed in the claims. The modified embodiments should not be construed independently of the technical spirit or scope of the present disclosure.

## Claims

1. A video output device comprising:
a display;
a network interface unit that exchanges data with a server;
an external device interface unit wirelessly connected to an external speaker;
an audio output unit; and
a signal processing device that controls respective sound outputs of the external speaker and the audio output unit,
wherein, in a state where sound is set to be output through the external speaker, the signal processing device
receives a user request to output sound together through both the external speaker and the audio output unit,
transmits information on the external speaker to the server and receives audio delay information associated with the external speaker from the server, in response to the user request, and
synchronizes a sound output of the respective sound outputs of the external speaker and the audio output unit based on the received audio delay information.

2. The video output device of claim 1, wherein the external speaker is a Bluetooth speaker connected via Bluetooth through a wireless communication unit included in the external device interface unit.

3. The video output device of claim 1, wherein the state where the sound is set to be output through the external speaker is a state where the external speaker is connected via Bluetooth so as to output sound associated with an image output from the video output device through the external speaker instead of the audio output unit.

4. The video output device of claim 1, wherein, in response to the user request, the signal processing device transmits the information on the external speaker to the server through the network interface unit, and concurrently requests the audio delay information associated with the external speaker from the server.

5. The video output device of claim 1, wherein the information on the external speaker includes at least one of the following: a device name of the external speaker and MAC address information of the external speaker.

6. The video output device of claim 1, wherein, upon receiving the audio delay information associated with the external speaker from the server, the signal processing device adjusts a sound output time of the audio output unit based on a delay time included in the audio delay information.

7. The video output device of claim 1, wherein, when synchronizing the sound output of the audio output unit based on the audio delay information, the signal processing device synchronizes the sound output of the audio output unit while maintaining a connection to the external speaker without disconnecting the external speaker.

8. The video output device of claim 1, wherein, when synchronizing the respective sound outputs of the external speaker and the audio output unit based on the audio delay information, the signal processing device adjusts an image output time of an image output from the display and a sound output time of sound output from the audio output unit based on a delay time included in the audio delay information.

9. The video output device of claim 1, wherein, when the signal processing device does not receive the audio delay information associated with the external speaker from the server, the signal processing device disconnects from the external speaker and measures a delay time regarding an audio output time of the external speaker.

10. The video output device of claim 9, wherein, based on the measured delay time, the signal processing device sets a sound output time of the audio output unit so as to output sound together through both the external speaker and the audio output unit and reconnects to the external speaker, thereby outputting sound together through both the external speaker and the audio output unit.

11. The video output device of claim 10, wherein, when sound is output together through both the external speaker and the audio output unit without any additional change in settings for a predetermined time, the signal processing device transmits the information on the external speaker and information on the measured delay time to the server.
